# EUROPÄISCHE PATENTSCHRIFT

(11) **EP 2 188 198 B1**
(45) Veröffentlichungstag und Bekanntmachung des Hinweises auf die Patenterteilung: **16.03.2016**
(21) Anmeldenummer: 08785070.7
(22) Anmeldetag: 25.07.2008
(51) Int. Cl.: B65G 47/08, B65G 17/26, B65G 47/84, B65B 21/06

(54) **VORRICHTUNG ZUR BILDUNG VON PRODUKTGRUPPEN**
APPARATUS FOR FORMING GROUPS OF PRODUCTS
DISPOSITIF POUR FORMER DES GROUPES DE PRODUITS

(30) Priorität: 16.08.2007 DE 102007038827
(43) Veröffentlichungstag der Anmeldung: 26.05.2010
(73) Patentinhaber: KHS GmbH, 44143 Dortmund (DE)
(72) Erfinder: RIPKENS, Hans-Gerd, 45574 Goch (DE); SCHAGIDOW, Tuchwat, 47608 Geldern (DE); KAMPS, Sebastian, 47533 Kleve (DE); RÜTTEN, Thomas, 47559 Kranenburg (DE)
(86) Internationale Anmeldenummer: PCT/EP2008/006117
(87) Internationale Veröffentlichungsnummer: WO 2009/021608

(56) Entgegenhaltungen:
- EP-A- 1 522 508
- EP-A1- 0 403 079
- EP-A1- 1 382 532
- WO-A-2008/007738
- DE-A1- 19 601 207
- DE-U1- 20 315 764
- US-A- 4 552 261
- US-A- 5 540 036

## Beschreibung

Die Erfindung richtet sich auf eine Vorrichtung zur Bildung von Produktgruppen aus einem Strom aus einer über Fördereinrichtungen zugeführten Vielzahl Identischen Stückgutes mit einer Zuführbahn und taktweise quer zur Transportebene in den Produktstrom eingreifenden Einteilelementen an wenigstens einem Paar angetriebener, endlos umlaufender Ketten, Zahnriemen od. dgl.

Eine solche Gruppierungseinrichtung unterhalb einer Förderstrecke zeigt beispielsweise die DE-40 36 341-A1, die von unten in den Produktstrom eingreifende Anschlagelemente zeigt, die an endlos umlaufenden band- oder kettenartigen Antriebselementen vorgesehen sind. Dabei entspricht der Abstand zwischen einem Paar von Gruppierungselementen der späteren Produktgruppenabmessung, wie sie den Verpackungsmaschinen zugeführt werden soll, d.h. eines der Elemente legt den in Transportrichtung vorderen Bereich der Produktgruppe fest, während das hintere Element in die nachfolgenden Flaschen eingreift, um diese beim Weitertransport der ersten Gruppe am Vorstreben zu hindern. Wird dann wiederum der Takt für den Weitertransport eingeschaltet, kann die Gruppe entsprechend getrennt weitertransportiert werden.

Eine ähnliche Gestaltung derartiger Gruppierungseinrichtungen zeigt die DE-10 2004 042 474-A1, wobei dort ein Balken mit Einteilfingem auf der einen Seite des Transportbandes unterhalb der Transportebene angeordnet ist und auf der gegenüberliegenden Seite ein zweiter Balken mit einer zweiten Gruppe von Einteilfingem der Funktionsweise, die etwa der oben beschriebenen entspricht.

Eine insbesondere was die Erfassung der jeweiligen Positionierung angeht weitere Entwicklung einer derartigen Vorrichtung zeigt die DE-10 2005 063 193-A1.

Eine gattungsgemäße Vorrichtung wurde durch die EP 1 522 508 A1 bekannt. Diese Schrift stellt eine Abteil-, Synchronisierungs- und Verdichtungsvorrichtung vor, welche nicht an bestimmte Abmessungen von Produkten gebunden ist, sondern ohne Umbaumaßnahmen lediglich durch Programmierung an unterschiedlichste Produktabmessungen und Produktformationen angepasst werden kann. Diese Vorrichtung eignet sich besonders für hoch flexible Anlagen, welche häufig verschiedenste Produkte verarbeiten müssen. Für Anlage, welche lediglich ein oder zwei verschiedenen Produkte verarbeiten müssen, erscheint diese Anlage als zu aufwändig.

Ebenfalls bekanntwurde die DE 203 15 764 U1, welche im Wesentlichen der zuvor beschriebenen EP 1 522 509 A1 entspricht und dieser nichts hinzufügt.

Eine weitere vergleichbare Vorrichtung wurde durch die EP 0 403 079 bekannt. Bei dieser Vorrichtung wird eine Produktformation aus einem geschlossenen Produktstrom dadurch abgeteilt, dass zunächst Abteilfinger, welche die Horizontalgeschwindigkeit des Produktstromes aufweisen, von unterhalb der Transportebene in den geschlossenen Produktstrom einfahren. Anschließend wird die so definierte Produktformation durch eine Erhöhung der Horizontalgeschwindigkeit derAbteilfinger vom Produktstrom abgeteilt. Nach dem Abteilen der Produktformation wird diese von einem, von oben in den Transportweg eintauchenden Förderstab übernommen und weiter in Transportrichtung bewegt, worauf die Abteilfinger wieder unter die Transportebene abtauchen und sich wieder in Richtung des Anfangspunktes ihres Bewegungsablaufes bewegen.
Nachteilig an dieser Vorrichtung ist insbesondere, dass keine Möglichkeiten vorgesehen sind, um die Vorrichtung flexibel an sich ändernde Produktabmessungen anzupassen.

Ebenfalls bekannt wurde eine Vorrichtung gemäß der EP 1 382 532 A1. Auch diese Vorrichtung beschäftigt sich damit, Produktformationen aus einem kontinuierlichen Produktstrom abzuteilen. Dabei wird es als besonders wichtig angesehen, dass die Abteilfinger oder Abteilstäbe möglichst senkrecht von unten in den Produktstrom eintauchen. Dazu wird vorgeschlagen, die Abteilstäbe durch eine Doppelführung an mindestens zwei Punkten zu führen, wobei durch die sich verändernden Abstände der Doppelführungen zueinander die vertikale Ausrichtung der Abteilstäbe gesteuert werden kann. So wird erreicht, dass die Abteilstäbe mit senkrechter Ausrichtung in den Produktstrom eintauchen. Auch an dieser Vorrichtung ist nachteilig, dass keine Möglichkeiten vorgesehen sind, um die Vorrichtung flexibel an sich ändernde Produktabmessungen anzupassen.

Es hat sich nun gezeigt, dass die bekannten Lösungen eine gewisse Einschränkung darstellen, was die Variation an unterschiedliche Abmessungen von Produktgruppen angeht, etwa wenn die entsprechenden Anlagen auf andere Produktgrößen umgestellt werden. Derzeit ist man bemüht, auf derartigen Anlagen eine große Vielzahl von unterschiedlichen Produkten manipulieren zu können. So muss es möglich sein, die Manipulation großvolumiger Mineralwasserflaschen auf kleinere Flaschen umstellen zu können, z.B. auf Bierflaschen und wiederum auf noch kleinere Verpackungseinheiten, wie etwa Getränkedosen. Hierbei müssen die Abstände der Eingriffselemente und deren Position möglichst rasch und problemfrei veränderbar sein, ohne langfristig den Betrieb einer derartigen Anlage zu stören.

Die Aufgabe der vorliegenden Erfindung besteht darin, eine möglichst flexible Anpassungsmöglichkeit von Gruppierungseinrichtungen zu schaffen, die eine entsprechende Anlage für die Manipulation sehr unterschiedlicher Produkte geeignet macht bei genauer Positionierung der Eingriffselemente.

Gelöst wird diese Aufgabe durch eine Vorrichtunggemäß Anspruch 1.

Mit der Erfindung ist es möglich, wenigstens drei Kettenpaare od. dgl. an der Stelle der Produktgruppenbildung mit entsprechenden Eingriffselementen zu versehen und diese so zu positionieren, dass unterschiedliche Gruppengrößen möglich gemacht werden.

An dieser Stelle sei bemerkt, dass dann, wenn im Folgenden von "Kettenpaaren" die Rede ist, hier alle entsprechenden Vortriebselemente im Umlauf gemeint sind, d.h. ebenso Riemenpaare, Zahnriemenpaare und entsprechende Elemente.

Die Erfindung ist nicht nur auf drei Antriebswellen für drei Kettenpaare beschränkt, sondern richtet sich auch auf eine Mehrzahl von Antriebswellen und Kettenpaare, um eine Vielzahl von Stückgutgruppen aus z.B. Getränkeflaschen, Getränkedosen od. dgl. zu bilden, die dann Verpackungsmaschinen zugeführt werden, die diese Einheiten entsprechend verpacken und in Kartons oder auf Paletten absetzen, um nur einige Beispiele zu nennen. Bei einer Ausführungsform ist vorgesehen, dass einzelne Kettenpaare abgeschaltet werden können, wenn deren Betrieb für eine Charge, Verpackungsaufgabe nicht erforderlich ist. Hierzu werden die Querträger, auf welchen die Eingriffselemente befestigt sind demontiert.

Dadurch, dass erfindungsgemäß die Eingriffselemente bei Nichtgebrauch in bzw. unter die Ebene der Querträger wegschwenkbar sind, ist eine schnelle Anpassung an unterschiedliche Produkte möglich.

Ausgestaltungen der Erfindung ergeben sich aus den Unteransprüchen. Dabei kann beispielsweise vorgesehen sein, dass die die Umlenkzahnräder für die Ketten tragenden Wellen als Antriebswellen für ein Kettenpaar und als Kettenräder-Lagerwellen für die anderen Kettenpaare ausgebildet sind.

Sind z.B. drei Antriebswellen vorgesehen, so bilden in der Regel die jeweils stirnseitigen die Umlenkzahnräder tragenden Wellen je die Antriebswelle für ein Kettenpaar und die dritte Antriebswelle beaufschlagt das dritte Kettenpaar. Um eine entsprechende Synchronisation zu erreichen, kann vorgesehen sein, dass die dritte und/oder weitere Antriebswelle für das dritte und/oder weitere Kettenpaar über eine Wirkverbindung, wie Kettenschlingen, Zahnriemen od. dgl. mit dem Antriebskettenrad des dritten oder vierten Kettenpaares auf der jeweiligen Lagerwelle verbunden ist.

Zweckmäßig sind die Eingriffselemente an je auf einem Kettenpaar gelagerten Querträger angeordnet. Dies bedeutet, dass beispielsweise die Querträger immer eine doppelseitige Lagerung aufweisen, d.h. statisch bestimmt sind, was bei einer einseitig gelagerten Balkenlösung nach dem Stand der Technik nicht unbedingt gegeben ist.

Die Erfindung sieht auch eine gemeinsame Steuerung für die Antriebsmotoren vor, die der jeweiligen Anzahl von Antriebsmotoren und damit Kettenpaaren anpassbar ist. Diese Steuerung kann auch dazu herangezogen werden, etwa die Eingriffselemente, falls diese mit z.B. eigenen Antrieben in den Querträgern ausgerüstet sind, auf- und abzuschwenken, etwa durch magnetische Stellmotoren od. dgl.

Weitere Einzelheiten, Merkmale und Vorteile der Erfindung ergeben sich aufgrund der nachfolgenden Beschreibung sowie anhand der Zeichnung. Diese zeigt in
- Fig. 1: eine prinzipielle Darstellung einer erfindungsgemäßen Vorrichtung sowie in
- Fig. 2: eine stark vereinfachte Darstellung unterschiedlicher, mit der erfindungsgemäßen Vorrichtung zu erreichender Produktgruppen.

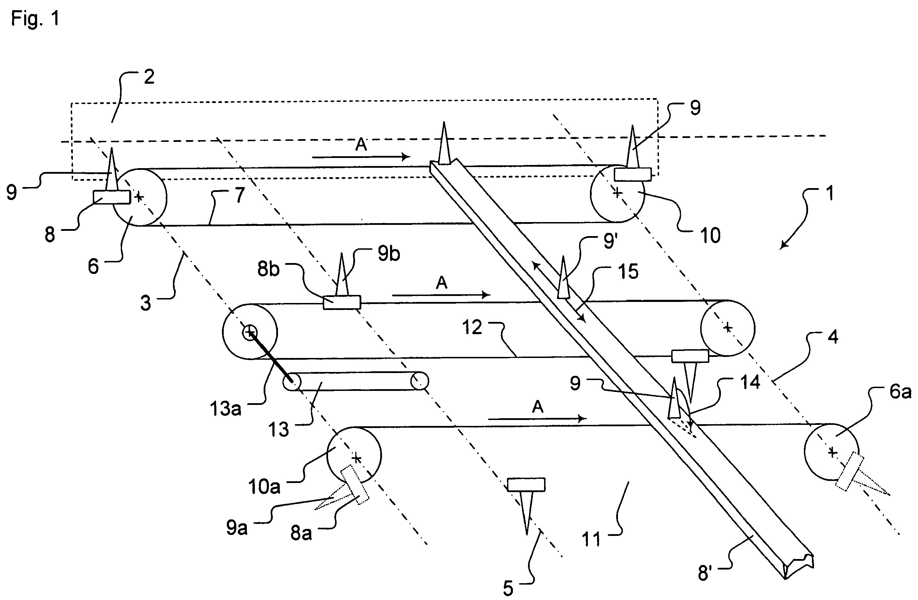

Von der allgemein mit 1 bezeichneten erfindungsgemäßen Vorrichtung ist schematisch lediglich eine Seitenwange des Vorrichtungsrahmens 2 dargestellt, in dem drei Wellen gelagert sind, nämlich eine stirnseitige Welle 3 auf der linken Figurenseite der Fig. 1, eine am anderen Ende der Vorrichtung positionierte stirnseitige Welle 4 sowie eine dazwischen positionierte, mit 5 bezeichnete Welle, die jeweils zum Antrieb von einem Kettenpaar dienen, wobei in Fig. 1 jeweils nur je eine Endloskette eines jeden Kettenpaares dargestellt ist.

Ohne dass die motorischen Antriebe, z.B. Servomotoren, hier dargestellt sind, wird über die Welle 3 ein Kettenantriebsrad 6 der mit 7 bezeichneten ersten Kette eines Kettenpaares angetrieben, wobei dieses Kettenpaar mit über die gesamte Breite der Vorrichtung 1 ausgerichteten Querträgern 8 bestückt ist mit angedeuteten Eingriffselementen 9.

Die Welle 4 trägt für die umlaufende Kette 7 ein mit 10 bezeichnetes Umlaufrad. Gleichzeitig dient die Welle 4 über einen nicht näher dargestellten Motor dem Antrieb eines mit 6a bezeichneten Kettenrades für ein weiteres Kettenpaar, von dem nur eine Kette 11 wiedergegeben ist, deren mit 10a bezeichnetes Umlenkrad auf der Welle 3 gelagert ist.

Auch die Welle 11 trägt Querträger 8a mit Einriffselementen 9a.

Über eine ebenfalls im Vorrichtungsrahmen 2 gelagerte Antriebswelle 5 wird ein Antriebskettenrad 6b für eine dritte Kette 12 angetrieben, hierfür ist eine Wirkverbindung, z.B. eine Kettenschlinge 13 vorgesehen. Auch diese dritte Kette 12 trägt Querträger 8b mit Eingriffselementen. Erkennbar lassen sich mit dieser erfindungsgemäßen Vorrichtung eine Vielzahl von Querträgern 8, in Fig. 1 angedeutet und mit 8' bezeichnet, mit einer wiederum Vielzahl von Eingriffselementen 9 bzw. 9' positionieren, um die Vorrichtung an unterschiedliche Einheiten anpassen zu können.

In Fig. 1 ist noch auf dem Querbalken 8' durch einen gekrümmten Pfeil 14 angedeutet, dass ein Eingriffselement 9' in die Ebene des Querbalkens 8' abklappbar sein kann. Durch einen Doppelpfeil 15 ist angedeutet, dass die Eingriffselemente 9' auch in ihrer Lage quer zur Förderrichtung veränderbar auf den Querträgern positioniert sein können.

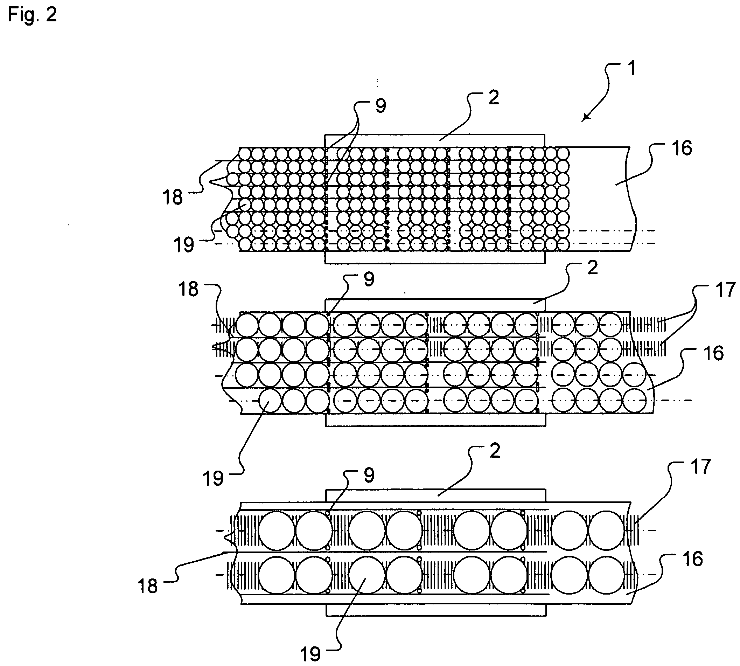

Lediglich beispielhaft zeigt die Fig. 2 unterschiedliche Behälter, welche zu Gebinden bzw. Verpackungseinheiten gruppiert werden und welche unterschiedlicher Durchmesser aufweisen. Diese Behälter 19 befinden sich auf einer mit 16 bezeichneten Förderbahn, die aus einer Mehrzahl von Einzelförderbändern 17 gebildet wird. Zwischen den Einzelförderbändern 17 sind Trennwände 18 angeordnet, so dass die Behälter in Kassen durch die Abteileinheit 1 geleitet werden. Weiterhin ist in Fig.2 zu erkennen, dass seitlich der Einzelförderbänder 17 die Eingriffselemente 9 immer Paarweise an einem Behälter 19 angreifen, was in Fig.1 aus Gründen der Übersichtlichkeit nicht dargestellt wurde.

## Patentansprüche

1. Vorrichtung (1) zur Bildung von Produktgruppen aus einem Strom aus einer über Fördereinrichtungen zugeführten Vielzahl identischen Stückgutes mit einer Zuführbahn und taktweise quer zur Transportebene in den Produktstrom eingreifenden Einteilelementen an wenigstens einem Paar angetriebener, endlos umlaufender Ketten, Zahnriemen od. dgl., mit innerhalb eines Vorrichtungsrahmens (2) angeordneten, wenigstens drei Antriebswellen (3,4,5) für drei Ketten-/Zahnriemenpaare (7,11,12) od. dgl. mit Eingriffselementen (9), wobei die Eingriffselemente (9) an je auf einem Ketten-/Zahnriemenpaar gelagerten Querträgern (8) angeordnet sind, **dadurch gekennzeichnet, dass** die Eingriffselemente (9) bei Nichtgebrauch in bzw. unter die Ebene der Querträger (8) wegschwenkbar sind (Pfeil 14).

2. Vorrichtung nach Anspruch 1, **dadurch gekennzeichnet, dass** die die Umlenkzahnräder für die Ketten oder Zahnriemen (7,11,12) tragenden Wellen (3-5) als Antriebswelle für ein Ketten-/Zahnriemenpaar und als Kettenräder- oder Zahnriemenrad-Lagerwellen für die anderen Ketten-/Zahnriemenpaar ausgebildet sind.

3. Vorrichtung nach Anspruch 1 oder 2, **dadurch gekennzeichnet, dass** die dritte (5) und/oder weitere Antriebswelle für das dritte (12) und/oder weitere Ketten-/Zahnriemenpaar über eine Wirkverbindung (13,13a), wie Kettenschlingen, Zahnriemen od. dgl., mit dem Antriebskettenrad (6b) oder Antriebszahnriemenrad des dritten oder vierten Ketten-/Zahnriemenpaares auf der jeweiligen Lagerwelle verbunden ist.

4. Vorrichtung nach einem der vorangehenden Ansprüche, **dadurch gekennzeichnet, dass** die Eingriffselemente (9) auf den Querträgern (8) auswechselbar und/oder in Ihrer Position bzw. in ihrem Abstand zueinander veränderbar angeordnet sind (Pfeil 15).

5. Vorrichtung nach einem der vorangehenden Ansprüche, **dadurch gekennzeichnet, dass** eine gemeinsame Steuerung für die Antriebsmotoren vorgesehen ist, die der jeweiligen Anzahl von Antriebsmotoren und damit Ketten-/Zahnriemenpaaren (7,11,12) anpassbar ist.

6. Vorrichtung nach einem der vorangehenden Ansprüche, **dadurch gekennzeichnet, dass** im bestimmungsgemäßen Betrieb der Vorrichtung eine oder mehrere Antriebswellen (3,4,5) bzw. Ketten-/Zahnriemenpaare stillgelegt werden können, während die anderen oder anderen Antriebswellen bzw. Ketten-/Zahnriemenpaare angetrieben werden.

## Claims

1. An apparatus (1) for forming groups of products from a flow of a plurality of identical piece goods fed by conveyor devices, having an infeed track and with dividing elements which engage into the product flow in a synchronised manner transversely to the transport plane on at least one pair of driven, endlessly circulating chains, toothed belts or the like, having arranged within an apparatus frame (2) at least three drive shafts (3,4,5) for three pairs of chains/toothed belts (7,11,12) or the like with engagement elements (9), the engagement elements (9) being arranged on a crossbar (8) supported on a pair of chains/toothed belts, **characterised in that** the engagement elements (9) can be swung away into or beneath the plane of the crossbar (8) when not in use (arrow 14).

2. The apparatus of claim 1 wherein the shafts (3-5) which carry the toothed guide wheels for the chains or toothed belts (7,11,12) are configured as a drive shaft for one pair of chains/toothed belts and as chain wheels or toothed-belt-wheel bearing shafts for the other pairs of chains/toothed belts.

3. The apparatus of claim 1 or 2 wherein the third (5) and/or further drive shaft for the third (12) and/or further pair of chains/toothed belts is connected by way of an interactive connection (13,13a) such as chain slings, toothed belts or the like to the drive chain wheel (6b) or toothed-belt drive wheel of the third or fourth pair of chains/toothed belts on the respective bearing shaft.

4. The apparatus of any one of the preceding claims wherein the engagement elements (9) are arranged on the crossbars (8) so as to be interchangeable and/or variable in their position or in their distance from one another (arrow 15).

5. The apparatus of any one of the preceding claims wherein a common controller which can be adapted to the particular number of drive motors and hence number of pairs of chains/toothed belts (7, 11, 12) is provided for the drive motors.

6. The apparatus of any one of the preceding claims wherein, when the apparatus is operated as intended, one or a plurality of drive shafts (3,4,5) or pairs of chains/toothed belts can be deactivated while the other or other drive shafts or pair of chains/toothed belts are driven.

## Revendications

1. Dispositif (1) pour la formation de groupes de produit à partir d'un courant d'une pluralité de pièces identiques amenée par des dispositifs de transport avec une bande d'amenée et des éléments de triage s'engageant en cadence transversalement au plan de transport dans le courant de produit sur au moins une paire de chaînes, courroies dentées ou similaires entraînées, tournant sans fin, avec au moins trois arbres d'entraînement (3, 4, 5) agencés dans un cadre de dispositif (2) pour trois paires de chaînes/courroies dentées (7, 11, 12) ou similaires avec des éléments d'engagement (9), les éléments d'engagement (9) étant agencés sur des traverses (8) logées chacune sur une paire de chaînes/courroies dentées, **caractérisé en ce que** les éléments d'engagement (9) peuvent être pivotés en cas de non-utilisation dans ou sous le plan des traverses (8) (flèche 14).

2. Dispositif selon la revendication 1, **caractérisé en ce que** les arbres (3-5) portant les roues dentées de renvoi pour les chaînes ou courroies dentées (7, 11, 12) sont réalisés comme arbre d'entraînement pour une paire de chaînes/courroies dentées et comme arbres de palier de roue de chaîne ou roue de courroie dentée pour l'autre paire de chaînes/courroies dentées.

3. Dispositif selon la revendication 1 ou 2, **caractérisé en ce que** le troisième (5) et/ou l'autre arbre d'entraînement pour la troisième (12) et/ou l'autre paire de chaînes/courroies dentées est relié par une liaison active (13, 13a) telles que des élingues de chaîne, courroies dentées ou similaire, à la roue de chaîne d'entraînement (6b) ou la roue de courroie dentée d'entraînement de la troisième ou quatrième paire de chaînes/courroies dentées sur l'arbre de palier respectif.

4. Dispositif selon l'une quelconque des revendications précédentes, **caractérisé en ce que** les éléments d'engagement (9) sont agencés de manière interchangeable sur les traverses (8) et/ou leur position ou leur distance l'un à par rapport à l'autre peut être modifiée (flèche 15).

5. Dispositif selon l'une quelconque des revendications précédentes, **caractérisé en ce qu'**une commande commune pour les moteurs d'entraînement est prévue, laquelle peut être adaptée au nombre respectif de moteurs d'entraînement et ainsi aux paires de chaînes/courroies dentées (7, 11, 12).

6. Dispositif selon l'une quelconque des revendications précédentes, **caractérisé en ce qu'**un ou plusieurs arbres d'entraînement (3, 4, 5) ou paires de chaînes/courroies dentées peuvent être immobilisés en fonctionnement en bonne et due forme du dispositif, alors que les autres ou d'autres arbres d'entraînement ou paires de chaînes/courroies dentées sont entraînées.
